# EUROPEAN PATENT SPECIFICATION

(11) **EP 1 733 506 B1**
(45) Date of publication and mention of the grant of the patent: **15.08.2012**
(21) Application number: 04721603.1
(22) Date of filing: 18.03.2004
(51) Int. Cl.: H04L 12/24

(54) **FAULT MANAGEMENT IN AN ETHERNET BASED COMMUNICATION SYSTEM**
FEHLERBEHANDLUNG IN EINEM AUF ETHERNET BASIERTEN KOMMUNIKATIONSSYSTEM
GESTION DES DEFAUTS DANS UN SYSTEME DE COMMUNICATION BASE SUR ETHERNET

(43) Date of publication of application: 20.12.2006
(73) Proprietor: ADVA AG Optical Networking, 82152 Martinsried (DE)
(72) Inventor: JAMIESON, Ross, Alexander, Plano, Texas 75023 (US); WEEKS, John, Kevin, Richardson, Texas 75082 (US); ELIAS, Paul, Anthony, Richardson, Texas 75082 (US); MEZEUL, Michael, Joseph, Allen, Texas 75013 (US); SANKEY, Wayne, Robert, Plano, Texas 75025 (US); REZAIE, Hamid, Reza, Dallas, Texas 75229 (US); BUCHANAN, James, Ottawa, Ontario K1M1A8 (CA)
(74) Representative: Isarpatent
(86) International application number: PCT/IB2004/000817
(87) International publication number: WO 2005/094000

(56) References cited:
- US-A- 5 923 849
- US-B1- 6 393 489
- US-B1- 6 694 455

## Description

### BACKGROUND

The present disclosure relates generally to communication services and, more specifically, to a system and method for deploying and managing Ethernet services.

Document US 6,393,489 B1 shows a media access control architecture and network management system. The media access controller includes a transmit media access controller that is configured to process out-going packet data received from an upper layer for transmission to a lower layer. A receive media access controller that is configured to process in-coming packet data received from the lower layer for transmission to the upper layer. A transmit multi-packet queue FIFO for receiving the out-going packet data from the upper layer before being passed to the transmit media access controller. A receive multi-packet queue FIFO for receiving the in-coming packet data that is received by the receive media access controller. The media access controller further including a media access controller manager interfacing with the transmit and receive media access controllers. The media access controller manager being responsible for managing the flow of packet data through the transmit and receive multi-packet queue FIFOs. Further, document US 6, 694,455 B1 describes a communication network performing distributed processing of fault and alarm objects. Communication companies using systems that incorporate Ethernet face a number of difficulties m managing their systems. These difficulties are generally caused by a lack of features in Ethernet standards and devices that would enable Ethernet services to be deployed in carrier-class fashion. For example, Ethernet generally requires multi-pair copper wire (e.g., Category 5 (CAT 5) cable) for 10/100 Base-T interfaces. However, copper-based Ethernet interfaces have distance limitations (approximately 100 meters over CAT 5 cabling) and there is generally no ability to diagnose cable faults for copper-based Ethernet links. In addition, there are limited carrier-class performance monitoring and diagnostic capabilities on Ethernet links. Existing monitoring and diagnostic procedures frequently utilize complex provisioning commands via non-standard-based command line interfaces or graphical user interfaces (GUIs) and require the human user to follow a sequence of manual troubleshooting steps. In addition, a Simple Network Management Protocol (SNMP) operations support system (OSS) overlay is needed to monitor Ethernet performance.

Diagnosis of problems frequently requires an operator or technician to log in to both sides of an Ethernet link, which not only adds complexity to trouble shooting, but may be difficult or impossible if the opposite end comprises a customer's equipment. As end-to-end diagnosis of Ethernet connections is not generally possible from a single end, fault isolation frequently entails sending a technician down a "chain" of designated points in a network until the location of the fault is isolated. This is both time consuming and costly.

Accordingly, what is needed is a system and method for single-ended provisioning, monitoring, and testing of Ethernet services. In addition, it is desirable to provide carrier-class services over a plurality of media types.

### SUMMARY

A technical advance is provided by a method and system for detecting and diagnosing a fault in an Ethernet service interface. The fault is detected and diagnosed from a first point in a communications link, where the communications link includes the Ethernet service interface and terminates at a second point. The method comprises monitoring the link from the first point to detect an occurrence of the fault, where the fault occurs between the first and second points. At least one fault attribute is identified when the fault is detected, where the fault attribute is identified from the first point, and one or more potential causes for the fault are categorized based on the identified fault attribute.

### BRIEF DESCRIPTION OF THE DRAWINGS

Fig. 1 is a flow chart illustrating a method for establishing, managing, and isolating faults from a single end of an Ethernet connection.
Fig. 2 is an exemplary network in which the method of Fig. 1 may be implemented.
Figs. 3 and 4 are a flow chart illustrating another embodiment of a method for establishing, managing, and isolating faults from a single end of an Ethernet connection in the network of Fig. 2.
Fig. 5 is another exemplary network in which the method of Fig. 1 may be implemented.
Figs. 6 and 7 are a flow chart illustrating another embodiment of a method for establishing, managing, and isolating faults from a single end of an Ethernet connection in the network of Fig. 5.
Fig. 8 illustrates one embodiment of a exemplary system for remotely switching a line status between terminated and non-terminated.
Figs. 9 and 10 illustrate another embodiment of an exemplary system for remotely switching a line status between terminated and non-terminated

### DETAILED DESCRIPTION

The present disclosure relates generally to communication services and, more specifically, to a system and method for deploying and managing Ethernet services. It is understood, however, that the following disclosure provides many different embodiments, or examples, for implementing different features of the invention. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

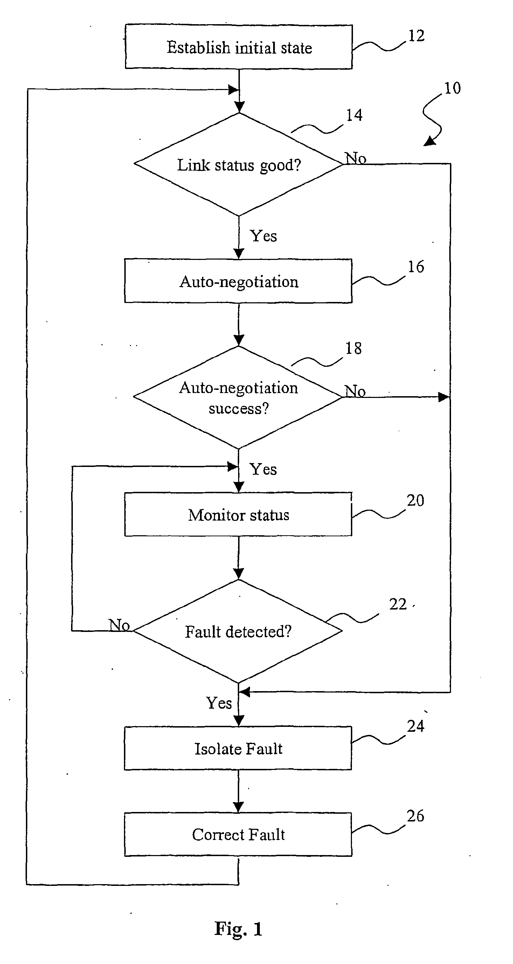

Referring to Fig. 1, in one embodiment, a method 10 is operable to provide pre-service, in-service, and out-of-service Ethernet capabilities from a single end of a network. As will be described later in greater detail, this enables a service provider to provision and monitor an Ethernet service interface, as well as detect and diagnose faults in the Ethernet service interface in a cost-effective manner. Such functionality may be achieved, for example, by using cable-testing equipment to add monitoring and diagnostic capabilities to legacy equipment for end-to-end services.

In step 12, an initial state is established. This may include, for example, establishing a link, checking a status of the link, verifying service, testing cable length, obtaining service parameters, and similar actions. In step 14, a determination is made as to whether the link status meets certain predefined performance criteria. If the link status fails, the method 10 jumps to step 24, where an attempt is made to isolate the fault. The method 10 then continues to step 26, where the fault is corrected. The type of correction may depend on the fault, and may range from the activation of automatic correction procedures to initiating a truck roll to send a technician to a location where the fault was diagnosed. The method 10 then returns to

### step 14.

If the link status passes step 14, the method 10 continues to step 16 where an auto-negotiation process occurs. If the auto-negotiation process fails, as determined in step 18, the method 10 jumps to steps 24 and 26 to isolate and correct the fault. If the auto-negotiation is successful, the method 10 continues to step 20, where it monitors the link for faults, service degradation, and other problems. The monitoring may include comparing current service conditions (e.g., packet loss) to a predefined set of parameters. If a fault occurs, as determined in step 22, the method 10 continues to steps 24 and 26 to isolate and correct the fault. Accordingly, the method enables a problem in an Ethernet connection to be identified and isolated from a single end of the Ethernet connection (e.g., from a service provider's end).

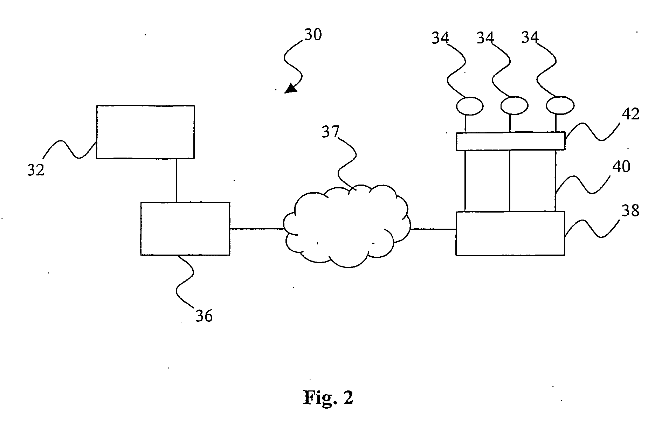

Referring now to Fig. 2, an exemplary network 30 provides a framework within which the method 10 of Fig. 1 may be executed to provide Ethernet services from a service provider 32 to a plurality of subscriber devices 34. The service provider 32 may be located at a central office or a similar point of presence that is connected to the network 30 through a device 36, such as a Synchronous Optical Network (SONET) add/drop multiplexer (ADM), which forms part of a SONET network 37. The device 36 is connected via fiber optics to another device 38, which is located relatively close to the subscriber devices 34 due to distance limitations imposed by Ethernet connectivity. The device 38, which incorporates SONET ADM technology, is operable to separate data intended for the subscriber devices 34 from other data being transported through the SONET network, as well as to add data from the subscriber devices 34 before passing it to the device 36. The device is connected to the subscriber devices 34 through cabling 40 appropriate for Ethernet communications (e.g., Category 5 (CAT 5) cable). Each cable may be connected to a layer 2 (L2) switch 42 that serves to terminate the Ethernet services at each subscriber device 34. In addition, time domain reflectometers (TDRs) (not shown) may be deployed either between the device 38 and the L2 switch 42 or within the device 38 itself. The TDRs aid in fault isolation along the cables 40 and associated devices 34, 38.

In the present example, the device 38 includes a plurality of 10/100BaseT Ethernet ports (not shown), which are provided as a module. These Ethernet ports enable the subscriber devices 34 to connect directly to the device 38 via a standard Ethernet cable (10BaseTX, 100BaseTX). In this direct-connect mode, commonly available Ethernet physical layers (PHYs) associated with the device 38 Ethernet ports may provide enhanced visibility of link conditions and performance monitoring on the Ethernet ports. The Ethernet ports are modeled as client ports.

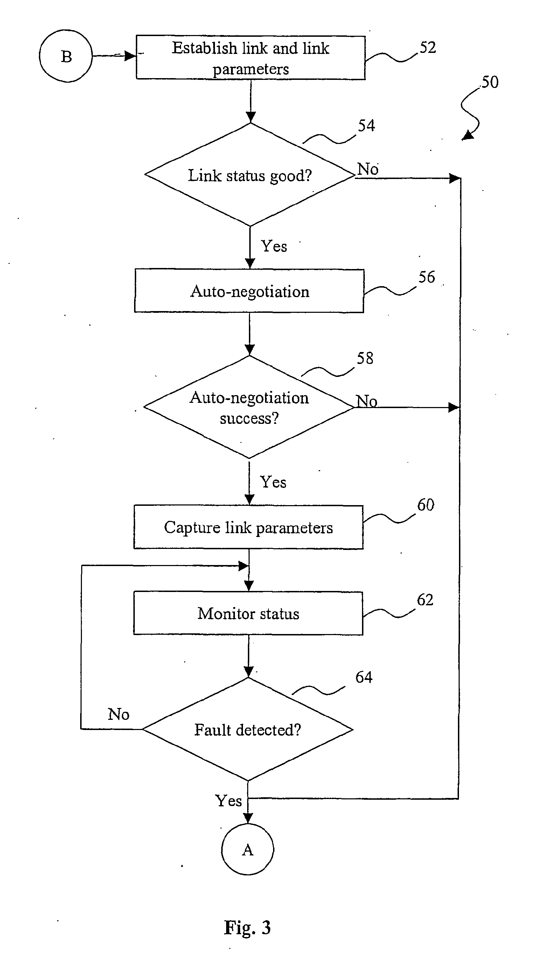

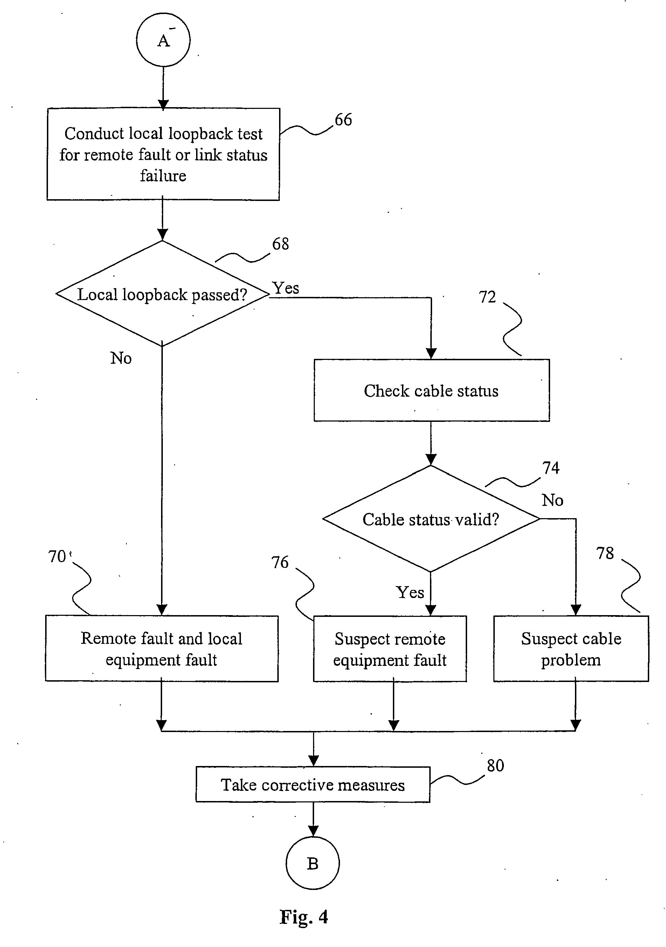

Referring now to Figs. 3 and 4, in another embodiment, a method 50 utilizes steps 52-78 to enable single-ended management of the device 38 and associated components by the service provider 32 to initialize, monitor, and diagnose problems with an Ethernet service interface as follows. In the present example, the method 50 is implemented by extending the capabilities provided by Transaction Language 1 (TL1) commands in data transport services. A more detailed description of specific commands and associated information is disclosed in U.S. Provisional Patent Application Ser. No. (Attorney Docket No. 31873.18), filed on December 9, 2002, and hereby incorporated by reference as if reproduced in its entirety. Other management interfaces and protocols may also be used, such as SNMP, CLI, CORBA, CMISE, and GUI.

Beginning in step 52, a link is established and link parameters are determined. This may include provisioning the Ethernet module (e.g., by using an ENT-EQPT command) and provisioning the Ethernet service interface (e.g., by using an ENT-E100 command), with port parameters defaulting to predetermined values. An Ethernet service is created by connecting one of the interfaces to a transport facility (e.g., the device 36). Other capabilities may be defined, such as control of over-subscription (e.g., where the bandwidth needed by services/subscribers exceeds the capacity of the network) and port parameters (e.g., a port rate limit).

Before the Ethernet interface is placed in-service, the method 50 determines a current link status (e.g., good or bad) in step 54. If the link status is bad, the method 50 enters a fault isolation stage, which will be described later with respect to Fig. 4. If the link status if good, the method 50 continues to step 56, where an auto-negotiation procedure is initiated. If the auto-negotiation is not successful, as determined in step 58, the method 50 continues to the fault isolation stage of Fig. 4. If the auto-negotiation is successful, the method 50 continues to step 60, where link parameters (e.g., cable status and cable length) are captured. The captured parameters may be used for future fault isolation purposes. For example, the captured cable length may be used in future fault reports to determine whether to report failures as "near end" (e.g., the end on the service provider's equipment, device 38) or "far end" (e.g., the end on the subscriber devices 34).

Although not shown, prior to placing the Ethernet interface in service, other steps may be executed. For example, if the Ethernet interface supports remote fault indication during auto-negotiation, then the method 50 may check for such an indicator. Furthermore, the present method 50 incorporates Automatic IN-Service (AINS), which allows an operator to place an Ethernet port in the in-service state prior to a physical cable being attached to the port. Any alarms on the port will be squelched until the method 50 has detected a valid signal on the port for some predefined period of time (e.g., ten seconds). Once the period of time has elapsed, the port will revert to normal operating mode and will report alarms.

Once the Ethernet interface is placed in service, the method 50 continues to steps 62, 64 and performs monitoring operations. The monitoring may check for link failure, loss of carrier and/or signal, low light conditions (for fiber optic interfaces), restart of auto-negotiation, remote fault indication, and faults, such as those generated by incorrect link parameters (e.g., cable status and length). The monitoring may also check for other faults and service degradation issues, as well as collect statistics for trend analysis. If a fault is detected in step 64, the method transitions to an out-of-service autonomous state (OOS-AU) and continues to step 66 of Fig. 4 to attempt to isolate the fault.

It is understood that some tests may occur while the Ethernet interface is in service, while other tests may require that the interface be removed from service (e.g., disruptive testing). For example, in the present example, in-service testing may occur for testing cable length during regular operation in 100/1000 Mbps modes. Out-of-service testing may allow the testing of the device 38 and its associated ports, and cables leading to the device 38. Furthermore, out-of-service testing may test equipment output transmitters and input receivers via internal loopback, as well as perform both terminated and non-terminated Ethernet cable problem analysis. Non-terminated analysis includes, for example, fault isolation along a cable and, for each cable connected to a port, identifying open circuits, short circuits, and impedance mismatches. Estimation of cable length on a properly terminated cable can be used to identify the location of a subsequent fault.

Referring now to Fig. 4 and with continued reference to Fig. 3, one or more tests are run automatically to determine whether the fault detected in step 64 is due to a local equipment failure, remote equipment failure, or a cable problem. In step 66, a local loopback test is conducted on the local equipment. If it is determined in step 68 that the local loopback test has failed, then the fault is likely due to a local equipment failure as indicated by step 70. Corrective measures may be taken and the method 50 returns to step 56.

If the local loopback test passes, then the fault is not in the local equipment and the method 50 continues to step 72, where a cable status check is made. The cable status may be determined using, for example, Ethernet PHYs with integrated TDR capability or standalone TDRs as described with respect to Fig. 2 and may be caused by a number of problems. For example, an invalid Ethernet cable length may be caused by an improper termination, while a change in cable length from an initially characterized value (obtained in step 60) may indicate a change to the cable (e g., the addition of a bad cable segment). If it is determined in step 74 that the cable status is not valid (e.g., the cable is disconnected or broken), then the fault is likely due to a cable problem, as indicated in step 78. If the cable status is valid, then the fault is likely due to a remote equipment failure. Corrective measures may be taken in step 80 and the method 50 returns to step 52. It is understood that Fig. 4 may be expanded to encompass a variety of failure scenarios, such as auto-negotiation failure.

Accordingly, the method 50 of Figs. 3 and 4 utilizes components of the network 30 of Fig. 2 to provide and manage Ethernet services. Furthermore, the method 50 enables the detection and isolation of faults to enable the service provider 32 to rapidly identify and address disruptions and potential disruptions to the Ethernet service. After a fault is detected and isolated, a detailed report may be generated regarding the fault, various fault attributes (e.g., type, location), and similar information.

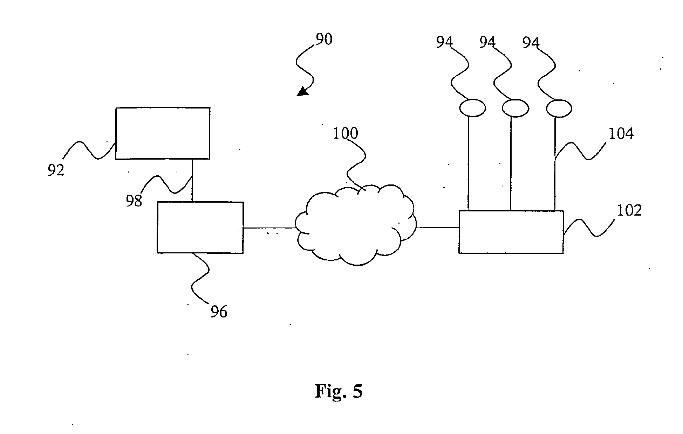

Referring now to Fig. 5, in yet another embodiment, an exemplary network 90 provides a framework within which the method 10 of Fig. 1 may be executed to provide Ethernet services from a service provider 92 to a plurality of subscriber devices 94. The service provider 92 is connected to a device 96 through a SONET-based fiber optic connection 98. The device 96 is operable to connect the service provider 92 to a device 102 (e.g., a media converter) through a copper wire network 100 using, for example, an Ethernet Media eXtension (EMX) service in which Ethernet frames are carried over the copper wire network 100. The network 100 in the present example is the local loop plant comprised of twisted copper pairs , such as is known in the art.

The device 102 includes an interface (e.g., a modem) for communicating via digital subscriber line (e.g., DSL, SHDSL, VDSL; which are herein referred to collectively as DSL) with the device 96, and an Ethernet interface for providing Ethernet services to the subscriber devices 94 via Ethernet compatible cabling 104. The device 102 presents the subscriber devices 94 with 10/100BaseT interface ports and may use DSL technologies on a wide area network (WAN) interface to extend the reach of an Ethernet link up to several thousand feet. If a WAN interface is provided, the device 102 provides enhanced visibility of loop conditions and performance monitoring on the device's subscriber Ethernet ports, as well as enhanced WAN link management via DSL loop management techniques and embedded management channels. In this manner, problems associated with the WAN extension may be diagnosed and single ended management features may be implemented on the client interface.

In the present example, both the Ethernet and DSL interfaces provide their respective ports through modules. The Ethernet ports are modeled as client ports and, to activate the ports, the Ethernet module is first provisioned (either manually or automatically). The Ethernet ports on the module may then be provisioned.

In the present example, each of the Ethernet ports may be associated with AINS, which enables the Ethernet port to be preprovisioned in a ready state prior to a physical cable being attached to the port. Any alarms on the Ethernet port will be squelched until a valid signal has been detected on the port for a predetermined period of time (e.g., ten seconds). Once the period of time has elapsed, the Ethernet port will revert to normal operating mode and will report alarms.

The device 102 may also conduct automatic Ethernet fault isolation upon detection of a failure using cable and equipment diagnostic features, which will be described in greater detail in the following text. For example, when a link fault is detected between the subscriber equipment and device 102, automatic isolation diagnostics may attempt an equipment port loopback at device 102 to check transmitter and receiver functions. If no transmitter or receiver faults are detected, a loop fault would be reported. In addition, the device 102 may extend Ethernet services to carrier serving area ranges and hide details of DSL link management from an operator. Accordingly, due to the system automatically provisioning the DSL link, there is no need to manually provision the DSL link when creating "remote" Ethernet ports.

The Ethernet ports may raise alarms on detecting predefined conditions or events. For example, an alarm may be raised on the basis of a link fault, a jabber (e.g., a condition where a station transmits for a period of time longer than the permissible packet length) receive, or a remote fault. These alarms are reported from the device 102 to the device 96 which reports them to the operator 92.

A DSL link and port implemented via the device 102's DSL interface (and module) may also be the source of faults. For example, the device 102 may monitor the DSL interface for alarm conditions such as loss of signal, loss of synchronization, and loop attenuation defects (e.g., where a loop attenuation threshold is exceeded). DSL port and equipment failures may raise alarms associated with network termination, loss of power, modem fault, port module removal (e.g., the module terminating the port is removed), and mismatched provisioning (e.g., there is a module provisioning mismatch with the physical module present in a slot).

Performance monitoring may occur at two points. Firstly, EtherStat performance monitoring may be conducted on the Ethernet ports at device 102 to allow the service provider to monitor the subscriber device's incoming traffic conditions at a predefined demarcation point. Secondly, the DSL link may be monitored at both the device 96 and the device 102 to provide information relating to the condition and performance of the digital local loop between the service provider 96 and the subscriber devices 102. Statistical data may be collected as previously described. For example, periodic reports may be generated that detail the status of both the DSL and Ethernet links over time.

Performance of the DSL link is monitored for both upstream and downstream directions. In the downstream direction, the modem associated with the device 102 collects performance counts which are forwarded to the device 96. In the upstream direction, the DSL link is monitored at the termination point on the DSL module. Performance monitoring may collect a variety of different statistics, as are disclosed in previously incorporated U.S. Provisional Patent Application Ser. No. (Attorney Docket No. 31873.18).

When delivering Ethernet services over DSL media, the DSL loop may be non-terminated (e.g., the device 102 is not present or not physically connected) or the device 102 may be present and physically connected. The loop may be non-terminated in cases where an operator connects a non-terminated loop to a port to perform single-ended loop qualification diagnostics. In this case, an operator may issue a diagnose command against the device 96, which enables the operator to characterize/test the DSL loop during pre-service activation. If the device 102 is physically connected and provisioned (e.g., a service is or has been running and a diagnostic is required to isolate a fault condition), the operator issues the diagnose command against the device 102 (to diagnose an Ethernet port problem) or against the Ethernet service connected to the device 102 (to diagnose a DSL line problem).

As previously described, some diagnostic tests may be executed while a connection is in-service, while others require that the connection be placed out-of-service. In-service diagnostics on the Ethernet ports of the device 102 are restricted to testing the Ethernet interface. In the present example, there are no in-service diagnostics available on the DSL loop other than performance monitoring.

Out-of-service testing (e.g., disruptive testing) may be accomplished using diagnostics associated with the device 102. The device 102 and the Ethernet service associated with the device should be out-of-service at the time of testing. This testing enables an operator to test and isolate faults on the Ethernet port and cable associated with a subscriber device 94, as well as faults associated with the DSL port and DSL physical link. If the device 102 is in-service during the test, only cable length (e.g., non-disruptive) testing may be done.

A number of out-of-service tests may be performed on the device 102. These include a port transmitter and receiver check on the Ethernet ports, which use internal loopback to enable detection of output transmitter or receiver input failures. Ethernet cable problem analysis may be performed for either non-terminated (TDR testing) or terminated cables. DSL equipment port transmitter and receiver diagnostics may be executed using internal loopback to enable detection of output transmitter or receiver input failures.

DSL link diagnostics may be executed from device 96 using single-ended loop diagnostics to determine certain characteristics of an non-terminated DSL Digital Local Loop (DLL), such as loop length, loop termination (e.g., whether the loop is an open or short circuit), loop gauge, upstream and downstream capacity (in bps), ideal upstream and downstream capacity (in bps) (e.g., capacity without considering effects of implementation loss), and dual ended loop testing.

It is understood that the method 10 of Fig. 1 may be implemented on other network configurations, such as using the transport of Ethernet frames over DS3 WAN interfaces and/or Ethernet over fiber interfaces.

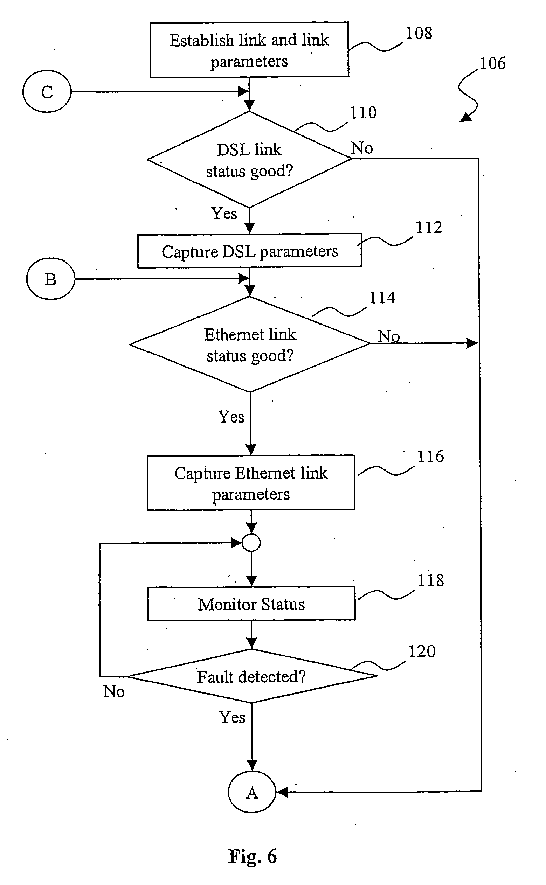

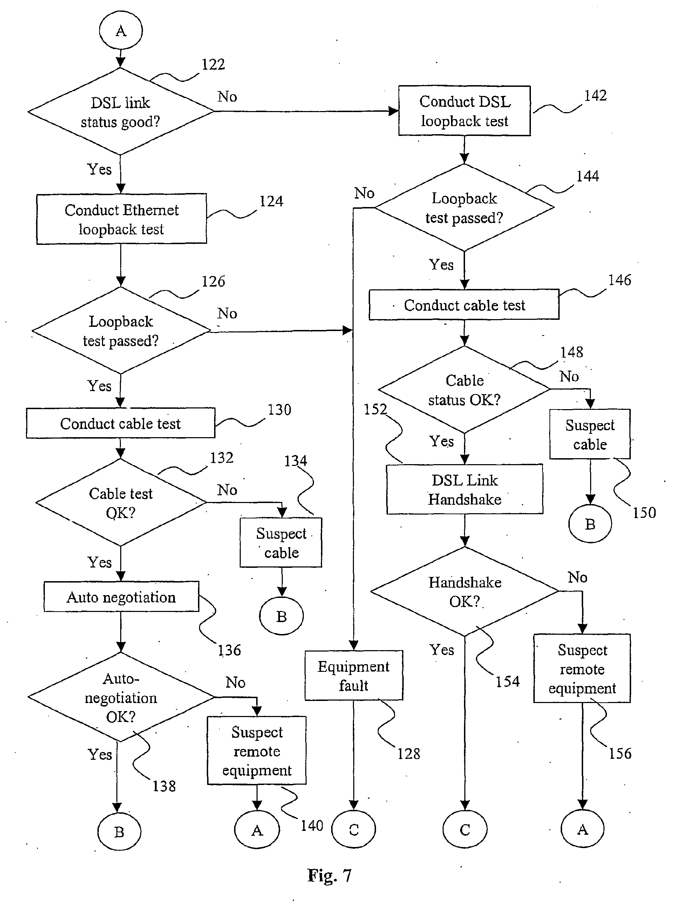

Referring now to Figs. 6 and 7, in yet another embodiment, a method 106 utilizes steps 108-156 to enable single-ended management of the device 102 and associated components by the service provider 92 to initialize, monitor, and diagnose problems with an Ethernet interface as follows. In the present example, the method 106 is implemented by extending the capabilities provided by DSL commands in data transport services. A more detailed description of specific commands and associated information is disclosed in previously incorporated U.S. Provisional Patent Application Ser. No. (Attorney Docket No. 31873.18). It is understood that corrective measures may be taken after a fault is detected and isolated, but such measures are not explicitly denoted in Figs. 6 and 7.

Beginning in step 108, a link is established and link parameters are determined. Before the Ethernet interface is placed in-service, the method 106 determines a current DSL link status (e.g., good or bad) in step 110. If the link status is bad, the method 106 enters a fault isolation stage, which will be described later with respect to Fig. 7. If the link status if good, the method 106 continues to step 112, where DSL parameters are captured. The method 106 then continues to step 114, where it determines whether an Ethernet link status. If the Ethernet link status is not good, then the method 106 enters the fault isolation stage that will be described later with respect to Fig. 7. If the method Ethernet status is good, the method 106 continues to step 116, where it captures Ethernet link parameters (e.g., cable status and cable length).

The method 106 then continues to steps 118, 120 and performs monitoring operations. The monitoring may check for link failure, loss of carrier and/or signal, low light conditions (for fiber optic interfaces), restart of auto-negotiation, remote fault indication, and a change in link parameters, such as cable status and length. The monitoring may also check for other faults and service degradation issues, as well as collect statistics for trend analysis. If a fault is detected in step 120, the method transitions to an out-of-service autonomous state (OOS-AU) and continues to step 122 of Fig. 7 to attempt to isolate the fault.

Referring now to Fig. 7 and with continued reference to Fig. 6, one or more tests are run automatically to determine whether the fault detected in step 120 is due to a local equipment failure, remote equipment failure, or a cable problem. In step 122, the DSL link status is determined. If the link status is good, the method 106 continues to steps 124, 126, where it conducts an Ethernet local loopback test and determines whether the test passed or failed. If it is determined in step 126 that the test failed, then the fault is likely due to an equipment fault, as indicated in step 128. The method 106 then returns to step 110.

If it is determined in step 126 that the test passed, then the method 106 conducts a cable test and determines whether the test passed or failed in steps 130, 132. If it is determined in step 132 that the test failed, then the fault is likely due to a cable problem, as indicated in step 134. The method 106 then returns to step 114. If it is determined in step 132 that the test passed, then the method continues to step 136, where it initiates an auto-negotiation procedure.

In step 138, a determination is made as to whether the auto-negotiation procedure succeeded or failed. If the auto-negotiation procedure failed, the fault is likely due to a remote equipment problem, as indicated in step 140. However, if the auto-negotiation procedure succeeded, the method returns to step 114 and checks the Ethernet link status as previously described.

Returning to step 122 of Fig. 7, if the DSL link status is determined to be bad, the method 106 proceeds to step 142, where a DSL loopback test is conducted. If it is determined in step 144 that the test failed, then the fault is likely due to an equipment fault, as indicated in step 128. The method 106 then returns to step 110.

If it is determined in step 144 that the test passed, then the method 106 conducts a cable test and determines whether the test passed or failed in steps 146, 148. If it is determined in step 148 that the test failed, then the fault is likely due to a cable problem, as indicated in step 150. The method 106 then returns to step 114. If it is determined in step 148 that the test passed, then the method continues to step 152, where it initiates a DSL link handshake. In step 154, a determination is made as to whether the handshake succeeded or failed. If the handshake failed, the fault is likely due to a remote equipment problem, as indicated in step 156. However, if the handshake succeeded, the method returns to step 110 and checks the DSL link status as previously described.

Accordingly, the method 106 of Figs. 6 and 7 utilizes components of the network 90 of Fig. 5 to provide and manage Ethernet services. Furthermore, the method 106 enables the detection and isolation of faults to enable the service provider 92 to rapidly identify and address disruptions and potential disruptions to the Ethernet service. After a fault is detected and isolated, a detailed report may be generated regarding the fault, various fault attributes (e.g., type, location), and similar information.

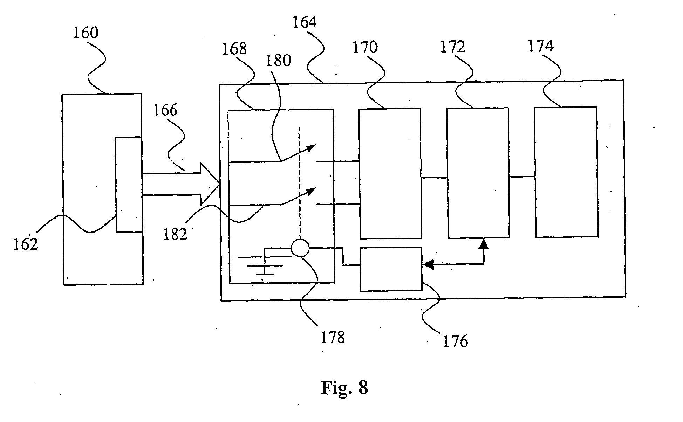

Referring now to Figs. 8-10, in still other embodiments, the performance and operation of TDRs (as described previously) may be enhanced in DSL and/or Ethernet environments as follows. TDR technology, which operates using reflected signals, is generally ineffective on properly terminated lines. Accordingly, to maximize the benefit of the TDR technology, a line that is to be characterized should not be terminated, which frequently means that a technician needs to visit a site and physically disable the connection. Once the connection is removed, tests can be run on the line. However, the process of sending a technician to remove the connection is time-consuming and expensive, and may be made more difficult if the connection is on the customer's premises or in the customer's equipment.

Referring particularly to Fig. 8, an exemplary DSL environment includes service provider line side equipment 160 and a DSL modem 164, which may be located on a subscriber's premises. The equipment 160 may be associated with a DSL unit 162, which enables the equipment 160 and modem 164 to communicate via a line 166. The modem 164 may include an analog front end 170, a DSL processor/digital signal processor 172, a service side interface (e.g., Ethernet), and a microcontroller or processor 176, as well as various connections and interfaces between these components.

In the present example, the modem 164 also includes a circuit 168, which is accessible to both the analog front end 170 and processor 176. The circuit 168 includes a relay 178 that connects two switches 180, 182 and the processor 176.

In addition to DSL traffic, the line 166 may include an out-of-band control channel (e.g., an embedded operation channel or EOC) that enables the equipment 160 to monitor and control the modem 164 via EOC messaging. In the present example, the EOC messaging may be used with the circuit 168 to enable the equipment 160 to disconnect the DSL line termination as follows.

To disconnect the line, the service provider would send a command via the EOC of line 166 to the modem 164, instructing the modem 164 to disconnect itself for an amount of time '*t*'. The time t may, for example, be predefined or may be included as a parameter in the command. Upon receiving the message, the modem 164 begins a timer and energizes the relay 178 to open the switches 180, 182. This results in a non-terminated line for a period of time defined by time t. During this time, the service provider may run diagnostics to characterize the line. When the timer expires, the processor 176 de-energizes the relay 178, which closes the switches 180, 182 and reestablishes the line. Accordingly, the effectiveness of a TDR associated with a DSL line may be enhanced by remotely affecting the line's termination.

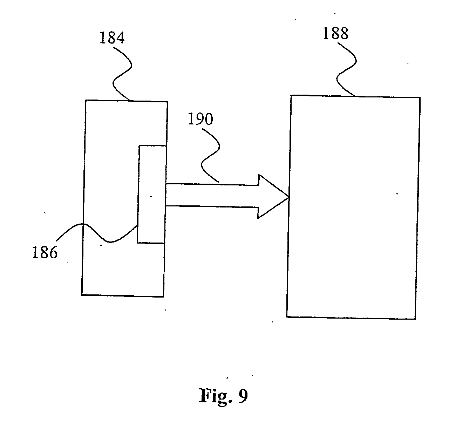

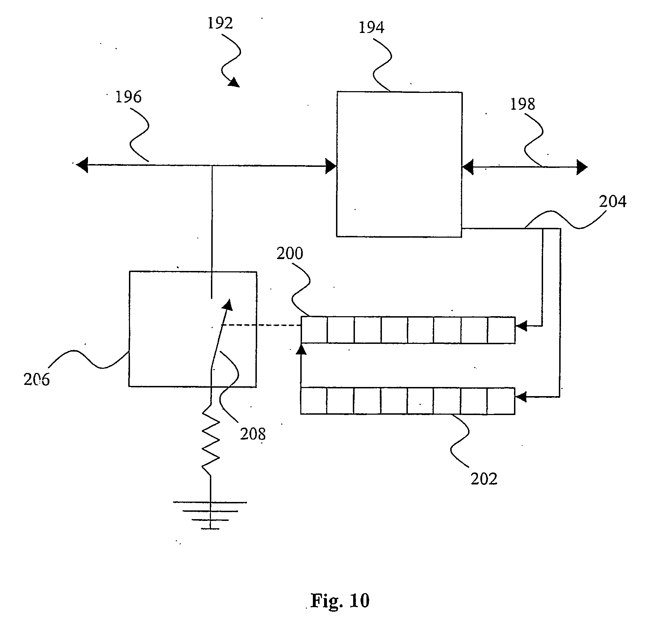

Referring now particularly to Figs. 9 and 10, an exemplary Ethernet environment includes server provider equipment 184 and a digital device 188. For purposes of illustration, the digital device 188 is a computer located on a subscriber's premises, but it is understood that the device 188 may be any kind of digital device applicable to the present disclosure. The equipment 184 is associated with an Ethernet unit 186 that enables the equipment 184 and computer 188 to communicate via a line 190.

In addition to various components known in the art (e.g., a processor, memory, bus, I/O device, network interface, etc., none of which are shown), the computer 188 may include a circuit 192 as illustrated in Fig. 10. In the present example, the circuit 192 is included on a network interface card (NIC) disposed in the computer 188. The NIC is associated with a media access control (MAC) number that identifies the NIC on a network. It is understood that the circuit may be associated with other components in the computer 188 or a device external to the computer 188.

The circuit 192 includes a control unit 194 that is connected to a data path indicated by lines 196, 198. The control unit 194 is also connected to a control register 200 and a timer register 202 via a line 204. The registers 200, 202 feed into a gate 206 that contains a relay 208. The relay 208 is used to disconnect line 196 from its normal termination circuitry by register 200 for the duration programmed into register 202.

To disconnect the line, the service provider may send a command via an inband signaling mechanism to the NIC and associated circuit 192. The command includes an instruction that the NIC take itself offline and an amount of time that the NIC should remain offline. Upon receiving the command, the control unit 194 loads the control and timer registers 200, 202 with appropriate values to activate the relay and place the NIC offline. This may be accomplished, for example, by altering the line impedance to appear as terminated (impedance) or not terminated (no impedance). When the period of time associated with the timer register 202 elapses, the circuit 192 de-energizes the relay 208 and places the NIC online. Accordingly, the effectiveness of a TDR associated with an Ethernet connection may be enhanced by remotely affecting the line's termination.

For example, if in-band, loopback request functionality is desired, such functionality may be obtained by combining cable testing technology with anomaly monitoring technologies to derive whether a piece of equipment is working properly. Therefore, the claims should be interpreted in a broad manner, consistent with the present invention.

## Claims

1. A method (106) for detecting and diagnosing a fault in an Ethernet service interface (164) from a first point in a communications link,
wherein the communications link includes the Ethernet service interface (164) and terminates at a second point,
the method (106) comprising:
monitoring (62, 64) the link from the first point to detect an occurrence of the fault, wherein the fault occurs between the first and second points;
identifying at least one fault attribute when the fault is detected, wherein the fault attribute is identified from the first point;
categorizing one or more potential causes for the fault based on the identified fault attribute,
sending a command to a digital device (188),
wherein the command includes an instruction that the digital device (188) alter the line (166) termination status from terminated to non-terminated;
setting a predefined period of time at a remote device (96);
monitoring (62, 64) the predefined period of time at the remote device (96); and
automatically altering the line (166) termination status from non-terminated to terminated when the predefined period of time has elapsed.

2. The method (106) according to claim 1 wherein the fault attribute includes a fault location.

3. The method (106) according to claim 2 wherein the fault attribute includes a fault type.

4. The method (106) according to any one of claims 1 to 3 wherein identifying the fault attribute includes executing a diagnostics procedure from the first point to isolate the fault.

5. The method (106) according to claim 4 wherein executing the diagnostics procedure includes performing (124, 126) a loopback test and, depending on a result of the loopback test, checking a status of a cable forming a portion of the communications link between the first and second points.

6. The method (106) according to claim 5 wherein the cable status is checked if the loopback test indicates that no problem exists in equipment on which the loopback test was performed.

7. The method (106) according to claim 6 wherein categorizing the one or more potential causes for the fault includes using the local loopback test result or the cable status to identify whether the fault is caused by equipment associated with the first point, equipment associated with the second point, equipment positioned between the first and second points, or cable forming a portion of the communications link between the first and second points.

8. The method (106) according to any one of claims 6 and 7 further comprising:
conducting at least one digital subscriber line (166) (DSL) test on a DSL connection, wherein the DSL connection comprises a portion of the communications link; and
determining whether the DSL test was successful, wherein a lack of success indicates that the fault is associated with the DSL connection.

9. The method (106) according to any one of claims 1 to 8 further comprising:
determining whether a link status is good or bad;
executing an auto-negotiation process if the link status is good;
determining whether the auto-negotiation process was successful; and
capturing at least one parameter of the communications link if the auto-negotiation process was successful.

10. The method (106) according to claim 9 wherein the at least one parameter includes at least a status of a cable forming a portion of the communications link between the first and second points or a length of the cable.

11. The method (106) according to claim 1, further comprising:
identifying a plurality of operational parameters associated with the Ethernet service interface, wherein the operational parameters establish a baseline for monitoring (62, 64) the Ethernet service interface (164) ;
monitoring (62, 64) the Ethernet service interface (164) from the single point to detect the fault based at least partly on the operational parameters; and
diagnosing the detected fault from the single point, wherein the diagnosis is operable to associate the fault with at least one of a fault location or a fault type.

12. The method (106) according to claim 11 wherein the diagnosis includes executing a series of tests on the communications system (160), wherein the tests are operable to isolate the fault to the Ethernet service interface.

13. The method (106) according to any one of claims 11 and 12 further comprising provisioning the Ethernet service interface (164) from the single point.

14. A system (160) for detecting and diagnosing a fault associated with an Ethernet service interface (164) from a first end of a communications link, wherein the link extends from the first end and terminates at a second end, and wherein the link includes the Ethernet service interface, the system (160) comprising:
a first communications device accessible to the first end;
a second communications device accessible to the second end;
a cable connecting the first and second devices; and
software associated with the first device for detecting the fault and determining whether the fault is associated with the first device, second device, or cable,
wherein said software is operable to:
send a command to the digital device (188),
wherein the command includes an instruction that the digital device (188) alter the line (166) termination status from terminated to non-terminated;
set a predefined period of time at the remote device (96);
monitor the predefined period of time at the remote device (96); and
automatically alter the line (166) termination status from non-terminated to terminated when the predefined period of time has elapsed.

15. The system (160) according to claim 14 further comprising a third communications device, wherein the second end terminates at the third device, and wherein the software is operable to determine whether the fault is associated with the third device.

16. The system (160) according to claim 15 wherein at least a portion of the cable comprises a digital subscriber line (166), wherein the software is operable to diagnose and detect whether the fault is associated with the digital subscriber line (166).

17. The method (106) according to claim 1 wherein the command further includes the predefined amount of time.

18. The method (106) according to any one of claims 1 and 17 wherein the digital device (188) is a network interface (164) card, and wherein the command is sent via Ethernet using an inband signaling mechanism.

19. The method (106) according to any one of claims 1, and 17 to 18 wherein the digital device (188) is a digital subscriber line (166) (DSL) modem, and wherein the command is sent via a DSL channel.

20. The system (160) according to claim 14 comprising a device having:
a controller (176) operable to respond to a termination command receive via the communications link; and
a relay (178) accessible to the controller (176), wherein the relay (178) is operable to alter the termination status between terminated and non-terminated in response to the controller (176).

21. The system of claim 20 further comprising a timer accessible to the controller (176), wherein the controller (176) directs the relay (178) to change the status to non-terminated in response to the command, and wherein the relay (178) changes the status to terminated after a predetermined period of time associated with the timer has elapsed.

22. The system according to any one of claims 20 and 21 further comprising an Ethernet interface (164) operable to receive the command as a media access control frame.

23. The system according to any one of claims 20 to 22 further comprising a digital subscriber line (166) interface (164) operable to receive the command via a DSL channel.

## Patentansprüche

1. Verfahren (106) zum Detektieren und Diagnostizieren eines Fehlers in einer Ethernet-Dienst-Schnittstelle (164) von einem ersten Punkt in einer Kommunikationsstrecke aus, wobei die Kommunikationsstrecke die Ethernet-Dienst-Schnittstelle (164) umfasst und an einem zweiten Punkt endet,
wobei das Verfahren (106) Folgendes umfasst:
- Überwachen (62, 64) der Strecke von dem ersten Punkt aus, um ein Eintreten des Fehlers zu detektieren, wobei der Fehler zwischen dem ersten und dem zweiten Punkt eintritt;
- Identifizieren mindestens eines Fehlerattributs, wenn der Fehler detektiert wird, wobei das Fehlerattribut von dem ersten Punkt aus identifiziert wird;
- Kategorisieren einer oder mehrerer potenzieller Ursachen für den Fehler auf der Grundlage des identifizierten Fehlerattributs,
- Senden eines Befehls an eine digitale Vorrichtung (188), wobei der Befehl eine Anweisung umfasst, dass die digitale Vorrichtung (188) den Terminierungsstatus der Leitung (166) von terminiert zu nicht-terminiert ändert;
- Einstellen eines zuvor festgelegten Zeitraums in einer räumlich abgesetzten Vorrichtung (96);
- Überwachen (62, 64) des zuvor festgelegten Zeitraums in der räumlich abgesetzten Vorrichtung (96); und
- automatisches Ändern des Terminierungsstatus der Leitung (166) von nicht-terminiert zu terminiert, wenn der zuvor festgelegte Zeitraum verstrichen ist.

2. Verfahren (106) nach Anspruch 1, wobei das Fehlerattribut eine Fehlerposition umfasst.

3. Verfahren (106) nach Anspruch 2, wobei das Fehlerattribut einen Fehler-Typ umfasst.

4. Verfahren (106) nach einem der Ansprüche 1 bis 3, wobei das Identifizieren des Fehlerattributs das Ausführen eines Diagnoseverfahrens von dem ersten Punkt umfasst, um den Fehler zu isolieren.

5. Verfahren (106) nach Anspruch 4, wobei das Ausführen des Diagnoseverfahrens das Ausführen (124, 126) eines Loopback-Tests und, in Abhängigkeit von einem Ergebnis des Loopback-Tests, das Überprüfen eines Status eines Kabels, das einen Abschnitt der Kommunikationsstrecke zwischen dem ersten und dem zweiten Punkt bildet, umfasst.

6. Verfahren (106) nach Anspruch 5, wobei der Kabelstatus überprüft wird, wenn der Loopback-Test ergibt, dass kein Problem in der Ausrüstung existiert, in welcher der Loopback-Test ausgeführt wurde.

7. Verfahren (106) nach Anspruch 6, wobei das Kategorisieren der einen oder mehreren potenziellen Ursachen für den Fehler das Verwenden der lokalen Loopback-Testergebnisse oder des Kabelstatus umfasst, um festzustellen, ob der Fehler durch die Ausrüstung verursacht wird, die zu dem ersten Punkt gehört, durch die Ausrüstung verursacht wird, die zu dem zweiten Punkt gehört, durch die Ausrüstung verursacht wird, die zwischen dem ersten und dem zweiten Punkt positioniert ist, oder durch das Kabel verursacht wird, das einen Abschnitt der Kommunikationsstrecke zwischen dem ersten und dem zweiten Punkt bildet.

8. Verfahren (106) nach einem der Ansprüche 6 und 7, das des Weiteren Folgendes umfasst:
- Ausführen mindestens eines Digital Subscriber Line (166) (DSL)-Tests auf einer DSL-Verbindung, wobei die DSL-Verbindung einen Abschnitt der Kommunikationsstrecke umfasst; und
- Bestimmen, ob der DSL-Test erfolgreich war, wobei ein erfolgloser Test angibt, dass der Fehler mit der DSL-Verbindung im Zusammenhang steht.

9. Verfahren (106) nach einem der Ansprüche 1 bis 8, der des Weiteren Folgendes umfasst:
- Bestimmen, ob ein Streckenstatus gut oder schlecht ist;
- Ausführen eines Selbstnegoziierungsverfahrens, wenn der Streckenstatus gut ist;
- Bestimmen, ob das Selbstnegoziierungsverfahren erfolgreich war; und
- Erfassen mindestens eines Parameters der Kommunikationsstrecke, wenn das Selbstnegoziierungsverfahren erfolgreich war.

10. Verfahren (106) nach Anspruch 9, wobei der mindestens eine Parameter mindestens einen Status eines Kabels, das einen Abschnitt der Kommunikationsstrecke zwischen dem ersten und dem zweiten Punkt bildet, oder einer Länge des Kabels umfasst.

11. Verfahren (106) nach Anspruch 1, das des Weiteren Folgendes umfasst:
- Identifizieren mehrerer Betriebsparameter, die der Ethernet-Dienst-Schnittstelle zugeordnet sind, wobei die Betriebsparameter eine Ausgangsbasis zum Überwachen (62, 64) der Ethernet-Dienst-Schnittstelle (164) festlegen;
- Überwachen (62, 64) der Ethernet-Dienst-Schnittstelle (164) von dem einzelnen Punkt aus zum Detektieren des Fehlers mindestens teilweise auf der Grundlage der Betriebsparameter; und
- Diagnostizieren des detektierten Fehlers von dem einzelnen Punkt aus, wobei die Diagnose in der Lage ist, den Fehler einer Fehlerposition und/oder einem Fehler-Typ zuzuordnen.

12. Verfahren (106) nach Anspruch 11, wobei die Diagnose das Ausführen einer Reihe von Tests an dem Kommunikationssystem (160) umfasst, wobei die Tests geeignet sind, den Fehler auf die Ethernet-Dienst-Schnittstelle zu isolieren.

13. Verfahren (106) nach einem der Ansprüche 11 und 12, das des Weiteren umfasst, die Ethernet-Dienst-Schnittstelle (164) von dem einzelnen Punkt aus bereitzustellen.

14. System (160) zum Detektieren und Diagnostizieren eines Fehlers, der mit einer Ethernet-Dienst-Schnittstelle (164) verknüpft ist, von einem ersten Ende einer Kommunikationsstrecke aus, wobei sich die Strecke von dem ersten Ende erstreckt und an einem zweiten Ende endet, und wobei die Strecke die Ethernet-Dienst-Schnittstelle umfasst, wobei das System (160) Folgendes umfasst:
- eine erste Kommunikationsvorrichtung, die für das erste Ende zugänglich ist;
- eine zweite Kommunikationsvorrichtung, die für das zweite Ende zugänglich ist;
- ein Kabel, das die erste und die zweite Vorrichtung verbindet; und
- Software, die zu der ersten Vorrichtung gehört, zum Detektieren des Fehlers und zum Bestimmen, ob der Fehler mit der ersten Vorrichtung, der zweiten Vorrichtung oder dem Kabel im Zusammenhang steht, wobei die Software in der Lage ist:
- einen Befehl an die digitale Vorrichtung (188) zu senden, wobei der Befehl eine Anweisung umfasst, dass die digitale Vorrichtung (188) den Terminierungsstatus der Leitung (166) von terminiert zu nicht-terminiert ändert;
- einen zuvor festgelegten Zeitraum in der räumlich abgesetzten Vorrichtung (96) einzustellen;
- den zuvor festgelegten Zeitraum in der räumlich abgesetzten Vorrichtung (96) zu überwachen; und
- den Terminierungsstatus der Leitung (166) automatisch von nicht-terminiert bis terminiert zu ändern, wenn der zuvor festgelegte Zeitraum verstrichen ist.

15. System (160) nach Anspruch 14, das des Weiteren eine dritte Kommunikationsvorrichtung umfasst, wobei das zweite Ende an der dritten Vorrichtung endet und wobei die Software in der Lage ist, zu bestimmen, ob der Fehler im Zusammenhang mit der dritten Vorrichtung steht.

16. System (160) nach Anspruch 15, wobei mindestens ein Abschnitt des Kabels eine Digital Subscriber Line (166) umfasst, wobei die Software in der Lage ist, zu diagnostizieren und zu detektieren, ob der Fehler mit der Digital Subscriber Line (166) im Zusammenhang steht.

17. Verfahren (106) nach Anspruch 1, wobei der Befehl des Weiteren die zuvor festgelegte Zeitdauer umfasst.

18. Verfahren (106) nach einem der Ansprüche 1 und 17, wobei die digitale Vorrichtung (188) eine Netzwerkschnittstellen (164)-Karte ist und wobei der Befehl über Ethernet unter Verwendung eines Inband-Zeichengabemechanismus gesendet wird.

19. Verfahren (106) nach einem der Ansprüche 1 und 17 bis 18, wobei die digitale Vorrichtung (188) ein Digital Subscriber Line (166) (DSL)-Modem ist und wobei der Befehl über einen DSL-Kanal gesendet wird.

20. System (160) nach Anspruch 14, das eine Vorrichtung umfasst, die Folgendes aufweist:
- eine Steuereinheit (176), die dafür ausgelegt ist, auf einen Terminierungsbefehl zu reagieren, der über die Kommunikationsstrecke empfangen wird; und
- ein Relais (178), das für die Steuereinheit (176) zugänglich ist, wobei das Relais (178) in der Lage ist, in Reaktion auf die Steuereinheit (176) den Terminierungsstatus zwischen terminiert und nicht-terminiert zu wechseln.

21. System nach Anspruch 20, das des Weiteren einen Zeitmesser umfasst, der für die Steuereinheit (176) zugänglich ist, wobei die Steuereinheit (176) das Relais (178) anweist, den Status in Reaktion auf den Befehl zu nicht-terminiert zu ändern, und wobei das Relais (178) den Status zu terminiert ändert, nachdem ein zuvor festgelegter Zeitraum, der dem Zeitmesser zugeordnet ist, verstrichen ist.

22. System nach einem der Ansprüche 20 und 21, das des Weiteren eine Ethernet-Schnittstelle (164) umfasst, die dafür geeignet ist, den Befehl als einen Media Access Control-Frame zu empfangen.

23. System nach einem der Ansprüche 20 bis 22, das des Weiteren eine Digital Subscriber Line (166)-Schnittstelle (164) umfasst, die dafür geeignet ist, den Befehl über einen DSL-Kanal zu empfangen.

## Revendications

1. Procédé (106) permettant de détecter et de diagnostiquer une panne dans une interface de service Ethernet (164) à partir d'un premier point dans une liaison de communication,
dans lequel la liaison de communication comprend l'interface de service Ethernet (164) et se termine au niveau d'un second point,
le procédé (106) consistant à :
- surveiller (62, 64) la liaison à partir du premier point pour détecter une occurrence de la panne, dans lequel la panne se produit entre les premier et second points ;
- identifier au moins un attribut de panne lorsque la panne est détectée, dans lequel l'attribut de panne est identifié à partir du premier point ;
- catégoriser une ou plusieurs causes possibles de la panne sur la base de l'attribut de panne identifié,
- envoyer une commande à un dispositif numérique (188), la commande comprenant une instruction au dispositif numérique (188) de modifier l'état de terminaison de la ligne (166) de terminé à non terminé ;
- fixer une période de temps prédéfinie au niveau d'un dispositif distant (96) ;
- surveiller (62, 64) la période de temps prédéfinie au niveau du dispositif distant (96) ; et
- modifier automatiquement l'état de terminaison de la ligne (166) de non terminé à terminé lorsque la période de temps prédéfinie s'est écoulée.

2. Procédé (106) selon la revendication 1, dans lequel l'attribut de panne comprend une localisation de la panne.

3. Procédé (106) selon la revendication 2, dans lequel l'attribut de panne comprend un type de panne.

4. Procédé (106) selon l'une quelconque des revendications 1 à 3, dans lequel l'identification de l'attribut de panne comprend l'exécution d'une procédure de diagnostic à partir du premier point pour isoler la panne.

5. Procédé (106) selon la revendication 4, dans lequel l'exécution de la procédure de diagnostic comprend l'exécution (124, 126) d'un test de bouclage et, en fonction d'un résultat du test de bouclage, la vérification d'un état d'un câble formant une partie de la liaison de communication entre les premier et second points.

6. Procédé (106) selon la revendication 5, dans lequel l'état du câble est vérifié si le test de bouclage indique qu'aucun problème n'existe dans l'équipement sur lequel le test de bouclage a été effectué.

7. Procédé (106) selon la revendication 6, dans lequel la catégorisation desdites une ou plusieurs causes possibles de la panne comprend l'utilisation du résultat du test de bouclage local ou de l'état du câble pour déterminer si la panne est provoquée par l'équipement associé au premier point, par l'équipement associé au second point, par l'équipement placé entre les premier et second points, ou par le câble formant une partie de la liaison de communication entre les premier et second points.

8. Procédé (106) selon l'une quelconque des revendications 6 et 7, consistant en outre à :
- effectuer au moins un test de ligne d'abonné numérique (DSL) (166) sur une connexion DSL, dans lequel la connexion DSL comprend une partie de la liaison de communication ; et
- déterminer si le test DSL a réussi, dans lequel un échec indique que la panne est associée à la connexion DSL.

9. Procédé (106) selon l'une quelconque des revendications 1 à 8, consistant en outre à :
- déterminer si un état de la liaison est bon ou mauvais ;
- exécuter un processus d'auto-négociation si l'état de la liaison est bon ;
- déterminer si le processus d'auto-négociation a réussi ; et
- capturer au moins un paramètre de la liaison de communication si le processus d'auto-négociation a réussi.

10. Procédé (106) selon la revendication 9, dans lequel ledit au moins un paramètre comprend au moins un état d'un câble formant une partie de la liaison de communication entre les premier et second points ou une longueur du câble.

11. Procédé (106) selon la revendication 1, consistant en outre à :
- identifier une pluralité de paramètres de fonctionnement associés à l'interface de service Ethernet, dans lequel les paramètres de fonctionnement établissent une ligne de base pour surveiller (62, 64) l'interface de service Ethernet (164) ;
- surveiller (62, 64) l'interface de service Ethernet (164) à partir du point unique pour détecter la panne sur la base au moins en partie des paramètres de fonctionnement ; et
- diagnostiquer la panne détectée à partir du point unique, dans lequel le diagnostic permet d'associer la panne à au moins l'un d'une localisation de panne ou d'un type de panne.

12. Procédé (106) selon la revendication 11, dans lequel le diagnostic comprend l'exécution d'une série de tests sur le système de communication (160), dans lequel les tests permettent d'isoler la panne sur l'interface de service Ethernet.

13. Procédé (106) selon l'une quelconque des revendications 11 et 12, comprenant en outre l'approvisionnement de l'interface de service Ethernet (164) à partir du point unique.

14. Système (160) permettant de détecter et de diagnostiquer une panne associée à une interface de service Ethernet (164) à partir d'une première extrémité d'une liaison de communication, dans lequel la liaison s'étend à partir de la première extrémité et se termine au niveau d'une seconde extrémité, et dans lequel la liaison comprend l'interface de service Ethernet, le système (160) comprenant :
- un premier dispositif de communication accessible à la première extrémité ;
- un second dispositif de communication accessible à la deuxième extrémité ;
- un câble reliant les premier et second dispositifs ; et
- un logiciel associé au premier dispositif pour détecter la panne et déterminer si la panne est associée au premier dispositif, au second dispositif, ou au câble,
dans lequel ledit logiciel permet de :
- envoyer une commande au dispositif numérique (188), la commande comprenant une instruction au dispositif numérique (188) de modifier l'état de terminaison de la ligne (166) de terminé à non terminé ;
- définir une période de temps prédéfinie au niveau du dispositif distant (96) ;
- surveiller la période de temps prédéfinie au niveau du dispositif distant (96) ; et
- modifier automatiquement l'état de terminaison de la ligne (166) de non terminé à terminé lorsque la période de temps prédéfinie s'est écoulée.

15. Système (160) selon la revendication 14, comprenant en outre un troisième dispositif de communication, dans lequel la seconde extrémité se termine au niveau du troisième dispositif, et dans lequel le logiciel permet de déterminer si la panne est associée au troisième dispositif.

16. Système (160) selon la revendication 15, dans lequel au moins une partie du câble comprend une ligne d'abonné numérique (166), dans lequel le logiciel permet de diagnostiquer et de détecter si la panne est associée à la ligne d'abonné numérique (166).

17. Procédé (106) selon la revendication 1, dans lequel la commande comprend en outre la quantité de temps prédéfinie.

18. Procédé (106) selon l'une quelconque des revendications 1 et 17, dans lequel le dispositif numérique (188) est une carte d'interface réseau (164), et dans lequel la commande est envoyée par Ethernet en utilisant un mécanisme de signalisation dans la bande.

19. Procédé (106) selon l'une quelconque des revendications 1, 17 et 18, dans lequel le dispositif numérique (188) est un modem de ligne d'abonné numérique (DSL) (166), et dans lequel la commande est envoyée par l'intermédiaire d'un canal DSL.

20. Système (160) selon la revendication 14, comprenant un dispositif comportant :
- un contrôleur (176) permettant de répondre à une commande de terminaison reçue par l'intermédiaire de la liaison de communication ; et
- un relais (178) accessible au contrôleur (176), dans lequel le relais (178) permet de modifier l'état de terminaison entre terminé et non terminé en réponse à la commande (176).

21. Système selon la revendication 20, comprenant en outre une minuterie accessible au contrôleur (176), dans lequel le contrôleur (176) ordonne au relais (178) d'appliquer l'état terminé en réponse à la commande, et dans lequel le relais (178) applique l'état terminé après qu'une période de temps prédéterminée associée à la minuterie s'est écoulée.

22. Système selon l'une quelconque des revendications 20 et 21, comprenant en outre une interface Ethernet (164) permettant de recevoir la commande en tant que trame de contrôle d'accès au support.

23. Système selon l'une quelconque des revendications 20 à 22, comprenant en outre une d'interface (164) de ligne d'abonné numérique (166) permettant de recevoir la commande par l'intermédiaire d'un canal DSL.
